# EUROPEAN PATENT SPECIFICATION

(11) **EP 2 272 152 B1**
(45) Date of publication and mention of the grant of the patent: **22.05.2019**
(21) Application number: 09733476.7
(22) Date of filing: 07.04.2009
(51) Int. Cl.: H02K 5/04, H02K 5/16, H02K 9/14, H02K 5/18, H02K 7/08, H02K 5/20

(54) **A METHOD FOR MANUFACTURING THE FRAME OF AN ELECTRIC MACHINE, AN ELECTRIC MACHINE AND A FRAME OF AN ELECTRIC MACHINE**
VERFAHREN ZUR HERSTELLUNG DES GESTELLS EINER ELEKTRISCHEN MASCHINE, ELEKTRISCHE MASCHINE UND GESTELL EINER ELEKTRISCHEN MASCHINE
PROCÉDÉ DE FABRICATION DU CADRE D UNE MACHINE ÉLECTRIQUE, MACHINE ÉLECTRIQUE ET CADRE D UNE MACHINE ÉLECTRIQUE

(30) Priority: 18.04.2008 FI 20085331
(43) Date of publication of application: 12.01.2011
(73) Proprietor: Randax OY, 90630 Oulu (FI)
(72) Inventor: RANTAPÄÄ, Matti, FI-90800 Oulu (FI)
(74) Representative: Berggren Oy, Tampere
(86) International application number: PCT/FI2009/050259
(87) International publication number: WO 2009/127781

(56) References cited:
- EP-A2- 0 649 212
- WO-A1-88/07284
- WO-A1-2007/003927
- JP-A- 7 213 019
- JP-A- 59 011 752
- US-A- 5 019 737

## Description

### Field of the invention

The invention relates to a method for manufacturing the frame of an electric machine. In addition, the invention relates to an electric machine and a frame of an electric machine.

### Background of the invention

Typically the frame of an electric machine is formed of casted metal parts. Casting moulds and metal foundry is required for manufacturing casting parts. Castings are affordable as such but mould, storage and logistics costs considerably increase the total costs. Because of the somewhat high starting costs the use of casting parts is affordable in connection with large batches. The aim is to find more affordable solutions for manufacturing small batches in other ways than using casting parts. One method to manufacture the frame of an electric machine is to form suitable metal parts by welding. However, the welding methods used today are generally demanding and easily cause measuring errors and tension in the product for which reason extra machining is necessary in the manufacturing.

The document US 5 019 737 A1 discloses a twin-walled casing for electric motor with forced air cooling. The casing comprises an inner and an outer cylindrical jacket separated from each other by a plurality of radial ribs. The construction provides flow channels for cooling air. Head plates having bearings are provided at both ends of the casing. The head plates are fixed with the inner cylindrical jacket. However, fixing the head plates to the inner jacket may not make the structure stiff enough and additional stiffening members may be needed. Maintenance work may also be complicated when, for example, when the rotor or the bearings need to be replaced or repaired.

There is a need for finding a better solution for manufacturing single frames of electric machines.

### Brief summary of the invention

Now, a solution has been found that enables a cost-effective way to manufacture frames of electric machines also in small production batches.

To attain this purpose, a method according to the invention is characterized in what will be presented in the independent claim 1. An electric machine, in turn, is characterized in what will be presented in the independent claim 4. The other, dependent claims will present some preferred embodiments of the invention.

The basic idea of the manufacturing method is that the cut and partly bended parts are welded around a stator and finally only guides and fastening holes are machined, if needed. With this method small batches can be manufactured with reasonable costs and casting parts can be avoided.

In the method according to the basic idea of the invention, of sheet metal is formed a first sheath around the stator which sheath is attached to the stator by laser welding, as well as a cooling element which is attached to the first sheath by laser welding.

In one embodiment, a second sheath of sheet metal is attached to the cooling element by laser welding.

In one embodiment, the cooling element is formed of sheet metal by corrugating.

In one embodiment, a front flange is also formed in the frame and a bearing casing is formed in connection with the front flange to which casing a bearing can be fitted from inside the frame.

In one embodiment, an electric machine comprises at least a frame, a stator attached to the frame, an axis, a rotor attached to the axis and the front flange to which a bearing casing is fitted in order to fit the bearing used to support the axis. Bearing casing is fitted into the front flange in such a manner that the bearing can be placed into the bearing casing from inside the frame.

In one embodiment, the frame comprises the first flange formed of sheet metal which flange has been attached to the stator by laser welding and a cooling element formed of sheet metal which element has been attached to the first sheath by laser welding.

In one embodiment, the rotor is permanently magnetized.

In one application, a welding robot is used in the welding.

The different embodiments of the above-described arrangement, taken separately and in various combinations, provide several advantages. A significant advantage is that there is no need for casting mould wherein adjusting the manufacturing to different machines is easy and it is possible to manufacture small production batches.

An advantage of an application is that the machining work needed in the manufacturing of an electric machine decreases compared to solutions of prior art. At the best, machinings can be avoided altogether.

The previous advantages result in that there is no need for intermediate storage which in solutions of prior art is needed for the casting moulds or for the products transferred from one work step to another.

An advantage of an electric machine application is, in turn, that the bearing of the electric machine can be changed from inside the frame, i.e. from the rear end of the machine. Thus, the machine can be attached from its front flange to other structures. Thus, the maintenance and repair becomes easier and faster.

### Description of the drawings

In the following, the invention will be described in more detail with reference to the appended principle drawings, in which
- Fig. 1: shows an embodiment of an electric motor
- Fig. 2: shows a cross-section of the embodiment according to Fig. 1
- Fig. 3: shows a perspective view of the embodiment according to Fig. 2
- Fig. 4: shows a cross-sectioned perspective view of another embodiment of an electric motor
- Fig. 5: shows a cross-sectioned perspective view of a third embodiment of an electric motor

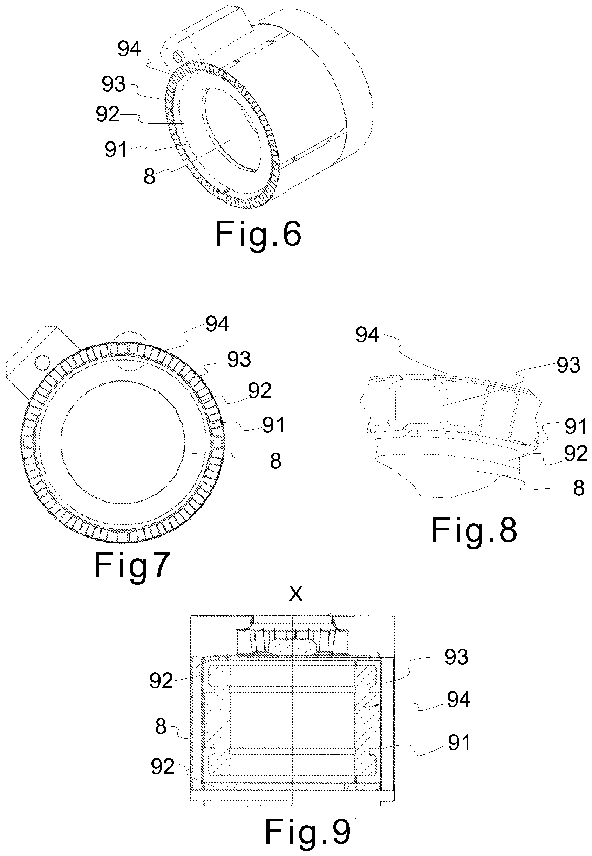

- Fig. 6: shows a perspective view of an electric motor according to an embodiment
- Fig. 7: shows a cross-section view on a perpendicular plane in relation to the axial line of the embodiment according to Fig. 6
- Fig. 8: shows a detail of enlarged Fig. 7
- Fig. 9: shows a cross-section view parallel with the axial line of the embodiment according to Fig. 6

For the sake of clarity, the drawings only show the details necessary for understanding the invention. The structures and details that are not necessary for understanding the invention but are obvious for anyone skilled in the art have been omitted in the figures in order to emphasize the characteristics of the invention.

### Detailed description of the invention

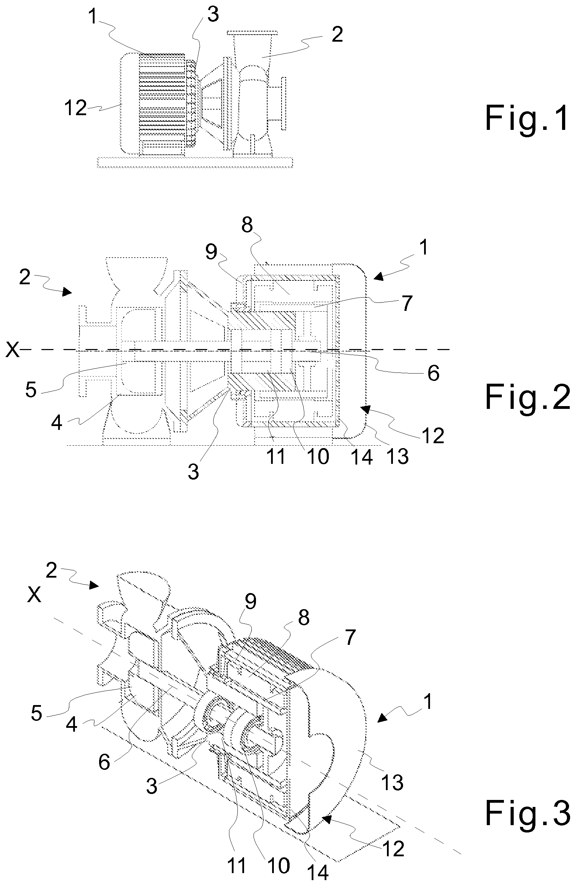

Figures 1 to 3 show an embodiment of an electric machine. In the example, electric motor 1 is coupled to the pump 2 with the same axis. Coupling is conducted at the end of the front flange 3 of the electric motor 1, i.e. front end of the electric motor. In figures 2 and 3 are shown a casing 4 of the pump 2 as well as an impeller 5. In the example, the impeller 5 is coupled to the common axis 6 with the electric motor 1 and most preferably at the end of the axis.

The electric motor 1 comprises an axis 6, a rotor 7, a stator 8 as well as a frame 9. The axis 6 and the rotor 7 are coupled to each other and their combination is fitted to rotate around the axial line X (rotating axis) of the axis. In the example, rotor 7 is permanently magnetized. Rotor 7 can be attached to the axis 6 in several different ways. For example, different couplings can be used to the attaching, wherein the attachment points of couplings are placed in the space between axis 6 and rotor 7. Using couplings advantageously enables the releasing of the axis 6 and rotor 7 from each other and removing of either part without having to remove both parts. For example, during maintenance of axis 6 it is advantageous to leave rotor 7 in place and only to remove the axis from the machine.

Axis 6 is supported to frame 9 of the electric motor with bearings 10 which are located in the bearing casing 11 in the vicinity of the front flange 3 of the electric motor 1. The bearing casing 11 has been formed in the machines according to examples so that the axis 6 and bearings 10 can be fitted into the bearing casing from the rear end direction 12 of the motor. Preferably, the bearings 10 can be replaced without removing the front flange 3 of the electric motor 1. There is also no need for the bearing supporting the axis 6 at the rear end 12 of the machine in the presented application. In addition, in the presented advantageous embodiment, the bearing assembly is shared by both the motor 1 and the pump 2. The frame 9 of the electric motor 1 is advantageously responsible for supporting the rear end of the pump 2and/or bearing casing 11. Thanks to the shared bearings of the pump 2 and motor 1, the bearing losses decrease and the structure is simplified.

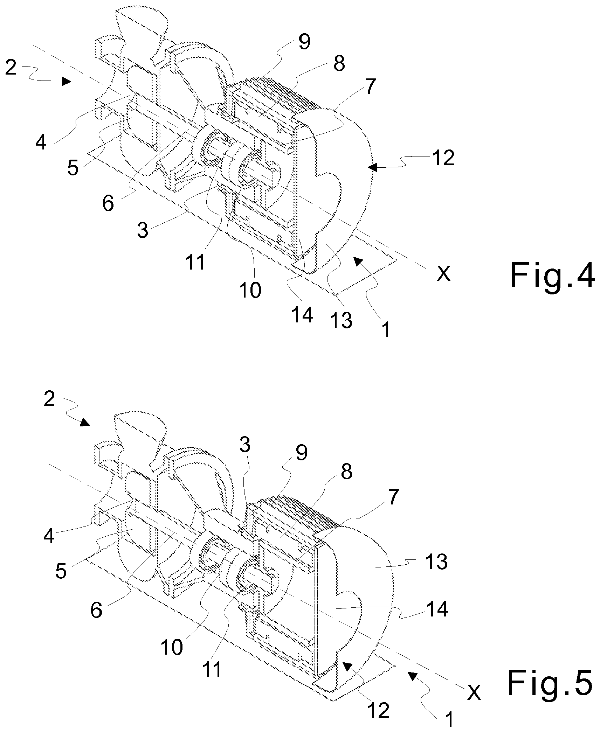

The rotor 7 can be formed in several different manners wherein the length of the electric machine 1 in the axis direction can be affected. In the solution according to Figures 1 to 3, the aim has been to create the size of the electric machine to be as short as possible. In the Figures 4 and 5 has been presented two other advantageous applications in which rotor 7 has been shaped to be different from the solution presented in Figures 1 to 3. By transferring the rotor 7 further away from bearing casing 11, a lot more space is produced, for example, for the lubrication system of the bearings 10. Rotor 7 can be different in some applications, for example it can have a solid structure or it can comprise a cage winding or grooves.

In the solutions according to Figures 1 to 5, it is possible to open the electric machine 1 from the rear end 12, for example, for maintenance or repair. After removing fan cover 13 and rear lid 14 it is possible to reach the rotor 7 through the opening at the rear end 12 of the electric machine 1. Depending on the structure of the rotor 7, it is possible to remove either to whole rotor 7 or release the connection between the rotor and axis 6. After that, it is possible to remove the axis 6, bearings 10 and/or sealings through the rear end 12 of the electric machine. This enables the maintenance and/or replacement of the so called wearing parts of the electric machine 1, for example, without having to remove the connection between the electric machine and pump 2. Thus, the maintenance is easier and quicker than in traditional electric machines in which the connection often has to be dismounted when beginning maintenance. In a corresponding manner, the axial line X has to be realigned after maintenance. As an example, an apparatus has been used in which an electric machine 1 has been connected to a pump 2. The electric machine 1 can be connected to other devices, such as a blower, a conveyer, work machine. The basic idea is to connect the axis 6 end of the electric machine 1 and advantageously also the front flange 3 to another device. In an advantageous embodiment, the bearing assembly 10 is shared by the motor 1 and the device connected to the motor, for example a pump 2. Thanks to the above-presented structure, the connection between the electric machine 1 and the other device 2 does not have to be removed because of, for example, maintenance or repair of bearings.

It is possible to form the above-presented electric motor 1 in several different ways. For example, casted metal parts can be used as frame structures 9. In the following, one advantageous method to form the frame 9 of an electric motor will be described.

The method is based on the use of metal sheets having a thickness that varies according to the size of machine and the basis of use. It is advantageous to use laser welding to the joints of the metal sheet whereby the forming welded seam is controllable and the weld does not draw. In addition, laser welding enables joining the first material to the second material by welding through either one of the material layers. Thus, there is no need for welding openings in the sheets. A welding robot can be used in the method. Different machines can be manufactured with the same robot by changing the settings of the program and tools whereby the production line easily enables the manufacturing of different machines.

In the method, a sheet metal ring 91 is installed on top of the sheet package of the stator 8. The sheet metal ring 91 can be installed either as a one or several piece so that it creates a pipe, i.e. the first sheath 91. The first sheath 91 is attached to the back of the stator 8 by laser welding. Preferably, the welding is performed through the surface of the first sheath 91 wherein a welded joint is formed between the first sheath 91 and stator 8. Preferably, the welding is performed as one or several hoop-like circles that circulate the axial line X.

Flanges 92 are advantageously welded to the ends of first sheath 91. Flanges 92 support and stiffen the structure. Flanges 92 can be formed in different ways, for example by laser cutting a suitable piece from sheet metal. Also at this point, the welding method is advantageously laser welding wherein the welding can be done to the flange 92 through the wall of the first sheath 91 and at the same time the forming welded seam is controllable.

On top of the first sheath 91 is attached a bended cooling plate 93 made of sheet metal. In the example, the bendings of the cooling plate 93 are substantially U-shaped but the bendings can also be shaped otherwise. For example, the bendings can be more V-shaped and it is also possible to combine different bendings to the same cooling plate 93. Advantageously, the cooling ribs formed by the cooling plate 93 are substantially in the direction of the axis of the electric machine. The cooling plate 93 is welded to the first sheath 91 by laser. Preferably, the welding is performed through the surface of the cooling plate 93 wherein a welded joint is formed between the cooling plate 93 and the first sheath 91. The welding is performed advantageously from the bottom of each crimp substantially in the direction of the axial line X. In the finished structure the cooling plate 93 acts advantageously as a part of the frame 9 of the electric machine.

In one application a second metal sheet sheath 94 is fitted on top of the cooling plate 93. Preferably, the second metal sheet sheath94 is attached by laser welding. Preferably, the welding is performed through the surface of the second sheath 94 wherein a welded joint is formed between the second sheath 94 and the cooling plate 93. At the same time, first sheath 91, cooling plate 93 and the second sheath 94 form a rigid and tough cell structure. The second sheath 94 acts, for example, as a protective sheath to the electric machine 1, preventing such as the soiling of the cooling structure.

A medium flow is directed into channels of the cooling cells situated between the cooling plate 93 and sheaths 91, 94 in the finished electric machine 1, which cooling medium keeps the temperature of the electric machine within allowed limits. For example, the medium can be air or other gas but fluid can also be used if the structure has been made sufficiently tight. In one application air is used for cooling, which air flow is generated with a fan (not shown in Figures) situated at the end of the electric machine 1 or fan blades (not shown in Figures) situated at the end of axis 6.

The above-mentioned manufacturing method of an electric machine 1 can be applied for manufacturing different kinds of electric machines than presented in the example. For example, the electric machine 1 can be an electric motor or generator. The power of the electric machine can also vary but the method is designed to be advantageous in manufacturing machines having power, for example, of 10 to 1000 kW.

By combining, in various ways, the modes and structures disclosed in connection with the different embodiments of the invention presented above, it is possible to produce various embodiments of the invention. Therefore, the above-presented examples must not be interpreted as restrictive to the invention, but the embodiments of the invention may be freely varied within the scope of the inventive features presented in the claims hereinbelow.

## Claims

1. A method for manufacturing the frame (9) of an electric machine (1) in which method
- a stator (8) is formed,
- a first sheath (91) is formed of sheet metal around the stator (8) and attached to the stator (8),
- a cooling element (93) formed of sheet metal is attached to the first sheath (91) radially outwardly,
- a second sheath (94) formed of sheet metal is attached to the cooling element (93) radially outwardly,
**characterized in that**
- flanges (92) are welded to the ends of the first sheath (91) to support and stiffen the structure of the frame (9) of the electric machine (1), and **in that**
- a front flange (3) is also formed to the frame (9) and a bearing casing (11), which contains bearings (10) for supporting an axis (6) of the machine, is formed in connection with the front flange, wherein in said bearing casing a bearing (10) can be replaced without removing the front flange (3) and wherein said bearing casing is arranged in such a way that the axis (6) is not supported by the bearings (10) at a rear end (12) of the machine, which is located opposite to the front flange (3).

2. The method according to claim 1, **characterized in that** the cooling element (93) is formed of sheet metal by corrugating.

3. The method according to claim 1 or 2, **characterized in that** the first sheath (91) and the second flange (94) are attached to the cooling element (93) by laser welding.

4. An electric machine comprising at least
- a stator (8),
- a frame (9) formed around the stator (8), wherein the stator (8) is attached to the frame (9),
- an axis (6)
- a bearing casing (11) indirectly connected to the frame (9),
- a rotor (7) attached to the axis, the frame (9) comprising at least
- a first sheath (91) surrounding the stator (8),
- a cooling element (93) attached to the first sheath (91) radially outwardly, and
- a second sheath (94) attached to the cooling element (93) radially outwardly,
wherein the first sheath (91), the second sheath (94) as well as the cooling element (93) are formed of sheet metal,
**characterized in that** the electric machine (1) further comprises
- flanges (92) welded to the ends of the first sheath (91) to support and stiffen the structure of the frame (9) of the electric machine (1), and **in that**
- a front flange (3) of a frame (9), to which flange the bearing casing (11) is arranged in order to fit bearings (10) for supporting the axis (6), and wherein the bearing casing (11) is arranged to the front flange (3) in such a way that the bearings (10) can be replaced without removing the front flange (3), and that the axis (6) is not supported by the bearings (10) at a rear end (12) of the machine, which is located opposite to the front flange (3).

5. The electric machine according to claim 4, **characterized in that** the first sheath (91) and the second sheath (94) is attached to the cooling element (93) by laser welding.

6. The electric machine according to any of the preceding claims 4 to 5, **characterized in that** the rotor (7) is permanently magnetized.

7. An apparatus that comprises an electric machine (1) according to any of the preceding claims 4 to 6.

8. The apparatus according to claim 7, **characterized in that** the apparatus comprises a pump (2) which is attached to the front flange (3) of the electric machine (1) and to the axis (6).

## Patentansprüche

1. Ein Verfahren zur Herstellung des Gestells (9) einer elektrischen Maschine (1), wobei in dem Verfahren
- ein Stator (8) gebildet wird,
- eine erste Umhüllung (91) aus Blech um den Stator (8) herum gebildet und an dem Stator (8) befestigt wird,
- ein aus Blech gebildetes Kühlelement (93) an der ersten Umhüllung (91) radial außen befestigt wird,
- eine zweite aus Blech gebildete Umhüllung (94) an dem Kühlelement (93) radial außen befestigt wird,
- **dadurch gekennzeichnet, dass**
- Flansche (92) an die Enden der ersten Umhüllung (91) geschweißt werden, um die Struktur des Gestells (9) der elektrischen Maschine (1) zu tragen und auszusteifen, und **dadurch, dass**
- an dem Gestell (9) auch ein vorderer Flansch (3) gebildet wird, und ein Lagergehäuse (11), das Lager (10) zum Stützen einer Achse (6) der Maschine enthält, in Verbindung mit dem vorderen Flansch gebildet wird, wobei in dem Lagergehäuse ein Lager (10) ausgetauscht werden kann, ohne dabei den vorderen Flansch (3) zu entfernen, und wobei das Lagergehäuse so befestigt ist, dass die Achse (6) nicht von den Lagern (10) an einem hinteren Ende (12) der Maschine, das zum vorderen Flansch (3) entgegengesetzt angeordnet ist, gestützt wird.

2. Verfahren nach Anspruch 1, **dadurch gekennzeichnet, dass** das Kühlelement (93) aus einem Blech durch Sicken gebildet wird.

3. Verfahren nach Anspruch 1 oder 2, **dadurch gekennzeichnet, dass** die erste Umhüllung (91) und der zweite Flansch (94) an dem Kühlelement (93) mittels Laserschweißen angebracht werden.

4. Eine elektrische Maschine, die mindestens Folgendes umfasst:
- einen Stator (8)
- ein Gestell (9), das um den Stator (8) herum gebildet ist, wobei der Stator (8) an dem Gestell (9) angebracht ist,
- eine Achse (6),
- ein Lagergehäuse (11), das indirekt an dem Gestell (9) befestigt ist,
- einen Rotor (7), der an der Achse befestigt ist,
wobei das Gestell (9) mindestens Folgendes umfasst:
- eine erste Umhüllung (91), die den Stator (8) umgibt,
- ein Kühlelement (93), das an der ersten Umhüllung (91) radial außen angebracht ist, und
- eine zweite Umhüllung (94), das an dem Kühlelement (93) radial außen angebracht ist,
wobei die erste Umhüllung (91), die zweite Umhüllung (94) sowie das Kühlelement aus Blech gebildet sind,
**dadurch gekennzeichnet, dass** die elektrische Maschine (1) darüber hinaus Folgendes umfasst:
- Flansche (92), die an die Enden der ersten Umhüllung (91) geschweißt sind, um die Struktur des Gestells (9) der elektrischen Maschine (1) zu tragen und auszusteifen, und **dadurch, dass**
- einen vorderen Flansch (3) eines Gestells (9), an welchem Flansch das Lagergehäuse (11) angeordnet ist, um Lager (10) zum Stützen der Achse (6) anzubringen, und wobei das Lagergehäuse (11) an dem vorderen Flansch (3) so angeordnet ist, dass die Lager (10) ausgetauscht werden können, ohne den vorderen Flansch (3) zu entfernen, und dass die Achse (6) nicht von den Lagern (10) an einem hinteren Ende (12) der Maschine, das zum vorderen Flansch (3) entgegengesetzt angeordnet ist, gestützt wird.

5. Elektrische Maschine nach Anspruch 4, **dadurch gekennzeichnet, dass** die erste Umhüllung (91) und die zweite Umhüllung (94) an dem Kühlelement (93) mittels Laserschweißen befestigt sind.

6. Elektrische Maschine nach einem der Ansprüche 4 bis 5, **dadurch gekennzeichnet, dass** der Rotor (7) permanent magnetisiert ist.

7. Eine Vorrichtung, die die elektrische Maschine (1) gemäß einem der vorhergehenden Ansprüche 4 bis 6 umfasst.

8. Vorrichtung gemäß Anspruch 7, **dadurch gekennzeichnet, dass** die Vorrichtung eine Pumpe (2) umfasst, die an dem vorderen Flansch (3) der elektrischen Maschine (1) und an der Achse (6) befestigt ist.

## Revendications

1. Procédé de fabrication du cadre (9) d'une machine électrique (1), dans lequel procédé :
- un stator (8) est formé,
- une première gaine (91) est formée en feuille de métal autour du stator (8) et fixée au stator (8),
- un élément de refroidissement (93) formé de feuille de métal est fixé à la première gaine (91) de manière radiale vers l'extérieur,
- une seconde gaine (94) formée en feuille de métal est fixée à l'élément de refroidissement (93) de manière radiale vers l'extérieur,
**caractérisé en ce que**
- des brides (92) sont soudées aux extrémités de la première gaine (91) afin de supporter et de renforcer la structure du cadre (9) de la machine électrique (1), et **en ce que**
- une bride avant (3) est également formée sur le cadre (9) et un boîtier de palier (11) qui contient des paliers (10) afin de supporter un axe (6) de la machine, est formé en connexion avec la bride avant, dans lequel, dans ledit boîtier de palier, un palier (10) peut être remplacé sans enlever la bride avant (3) et dans lequel ledit boîtier de palier est agencé de sorte que l'axe (6) ne soit pas supporté par les paliers (10) à une extrémité arrière (12) de la machine, qui est située à l'opposé de la bride avant (3).

2. Procédé selon la revendication 1, **caractérisé en ce que** l'élément de refroidissement (93) est formé d'une feuille de métal par ondulation.

3. Procédé selon la revendication 1 ou 2, **caractérisé en ce que** la première gaine (91) et la seconde bride (94) sont fixées à l'élément de refroidissement (93) par un soudage au laser.

4. Machine électrique comprenant au moins
- un stator (8),
- un cadre (9) formé autour du stator (8), dans lequel le stator (8) est fixé au cadre (9),
- un axe (6),
- un boîtier de palier (11) indirectement raccordé au cadre (9),
- un rotor (7) fixé à l'axe,
le cadre (9) comprenant au moins
- une première gaine (91) entourant le stator (8),
- un élément de refroidissement (93) fixé à la première gaine (91) de manière radiale vers l'extérieur, et
- une seconde gaine (94) fixée à l'élément de refroidissement (93) de manière radiale vers l'extérieur,
dans lequel la première gaine (91), la seconde gaine (94) ainsi que l'élément de refroidissement (93) sont formés de feuille de métal,
**caractérisé en ce que** la machine électrique (1) comprend en outre :
- des brides (92) soudées aux extrémités de la première gaine (91) afin de supporter et de renforcer la structure du cadre (9) de la machine électrique (1), et **en ce que**
- une bride avant (3) d'un cadre (9), bride sur laquelle le boîtier de palier (11) est agencé afin d'adapter des paliers (10) afin de supporter l'axe (6), et dans lequel le boîtier de palier (11) est agencé à la bride avant (3) de sorte que les paliers (10) puissent être remplacés sans enlever la bride avant (3), et que l'axe (6) ne soit pas supporté par les paliers (10) à une extrémité arrière (12) de la machine, qui est située à l'opposé de la bride avant (3).

5. Machine électrique selon la revendication 4, **caractérisée en ce que** la première gaine (91) et la seconde gaine (94) sont fixées à l'élément de refroidissement (93) par un soudage au laser.

6. Machine électrique selon l'une quelconque des revendications 4 à 5, **caractérisée en ce que** le rotor (7) est magnétisé en permanence.

7. Appareil qui comprend une machine électrique (1) selon l'une quelconque des revendications 4 à 6 précédentes.

8. Appareil selon la revendication 7, **caractérisé en ce que** l'appareil comprend une pompe (2) qui est fixée à la bride avant (3) de la machine électrique (1) et à l'axe (6).
